Europäisches Patentamt

European Patent Office

Office européen des brevets

(19)

(11) Veröffentlichungsnummer : **0 115 623**
**B1**

(12)                    EUROPÄISCHE PATENTSCHRIFT

(45) Veröffentlichungstag der Patentschrift :
09.07.86

(21) Anmeldenummer : 83113043.0

(22) Anmeldetag : 23.12.83

(51) Int. Cl.⁴ : **B 29 C 65/22, F 16 L 47/02**

(54) **Verfahren zum Verschweissen von Leitungselementen aus thermoplastischem Material und eine dafür geeignete Vorrichtung.**

(30) Priorität : 04.02.83 CH 638/83

(43) Veröffentlichungstag der Anmeldung :
15.08.84 Patentblatt 84/33

(45) Bekanntmachung des Hinweises auf die Patenterteilung : 09.07.86 Patentblatt 86/28

(84) Benannte Vertragsstaaten :
AT BE DE FR GB IT NL SE

(56) Entgegenhaltungen :
EP-A- 0 035 750
EP-A- 0 036 963
AT-B-   257 146
DE-B- 1 117 297
DE-B- 2 551 850
DE-B- 2 823 455

(73) Patentinhaber : GEORG FISCHER AKTIENGESELLS-
CHAFT
Mühlentalstrasse 105
CH-8201 Schaffhausen (CH)

(72) Erfinder : Thalmann, Alfred
Brunngasse 71
CH-8448 Uhwiesen (CH)
Erfinder : Lehmann, Ernesto
Ungarbühlstrasse
CH-8200 Schaffhausen (CH)

## Beschreibung

Die Erfindung betriff ein Verfahren zum Verschweissen von Leitungselementen aus thermoplastischem Material, wie es im Oberbegriff des Anspruchs 1 angegeben ist und eine zur Durchführung des Verfahrens erforderliche Vorrichtung.

Beim Verschweissen von thermoplastischen Kunststoffen ist es, wie anderweitig bereits beschrieben (CH-PS 532 996 bzw. DE-PS-2 242 369), von Vorteil, wenn krasse Temperaturunterschiede innerhalb der zu verschweissenden Teilen vermieden werden, damit keine überlagerte, unkontrollierbare Materialspannungen entstehen können.

Um z. B. zwei Rohrenden mittels einer Elektroschweissmuffe miteinander zu verbinden oder ein Sattelstück auf ein Rohr aufzuschweissen, ist es vorab erforderlich, den Muffenkörper oder das Sattelstück mindestens in den zu verschweissenden Zonen in engen Kontakt mit den entsprechenden Rohroberflächen zu bringen.

Im Falle der Schweissung mittels einer Muffe (EP-Al-0 036 963) wird dies in der Regel durch Aufschrumpfen derselben erreicht, indem beim Spritzgiessen oder beim einem anderen Herstellungsschritt in den Muffenkörper eingebrachte Schrumpfspannungen beim Erwärmen wieder freigelegt werden, oder im Falle der Sattelschweissung (DE-PS-2 242 369) wird dies durch mechanische Krafteinwirkung von aussen auf den Sattel- oder Schellenkörper erreicht.

Bei weiterer Energiezufuhr soll die flächig verteilte Auflagekraft in der Fügepartie aufrechterhalten bleiben, um den für eine einwandfreie Schweissung notwendigen Schmelzedruck zu erzeugen.

Um die bereits beschriebenen unerwünschten Spannungen, welche durch nur partielle Erwärmung hervorgerufen werden, möglichst gering zu halten, ist es vorteilhaft, nicht nur gezielt die Fügezone zu erwärmen, sondern die zu verschweissenden Teile sollen im Gesamt-Volumen in und um die Schweisszone herum möglichst gleichmässig erwärmt werden. Hierfür werden z. B. Schweissmuffen mit einer durchgehenden Heizwicklung (EP-Al-0 036 963) verwendet. Diese gewährleisten ein Schweissverfahren mit einer Durchwärmung und Schweissung auf der durchgehenden ganzen Länge der beiden Schweisszonen an den zu verbindenden Rohrenden.

Dadurch ergeben sich gleiche Schrumpfverhältnisse über die ganze Doppel-Schweissmuffenlänge und damit kleinste Spannungsdifferenzen nach dem Verschweissen.

Die Nachteile dieses Verfahrens sind jedoch, dass bei relativ dünnwandigen Rohren die Rohrenden einfallen bzw. deformieren, dass in diesem Bereich ein ungenügender Schweissdruck aufgebaut wird und Schmelze zwischen den Rohrenden in das Innere des Rohres abfliesst, wodurch sich ein Grat bildet. Dies kann sich noch verstärken, wenn durch den schweisstechnisch erwünschten Schmelzefluss in der Fügezone einzelne Heizleiterdrähte verschoben werden und dadurch an unerwünschter Stelle konzentriert Energie in die Verbindung einbringen. Diese Nachteile treten dabei noch verstärkt bei Materialien mit hohem Meltindex auf.

Bei einem zweiten bekannten Verfahren, bei welchem Schweissmuffen mit im Mittelbereich fehlenden Heizwindungen (z. B. CH-A 553 368) verwendet werden, können die vorgängig beschriebenen Nachteile grösstenteils vermieden werden, da die Rohrenden weniger stark erwärmt werden und somit dünnwandige Rohre weniger oder gar nicht einfallen und die Schmelze nicht zwischen die Rohrenden gelangt.

Als Nachteil entsteht jedoch die eingangs erwähnte ungleichmässige Erwärmung in der gesamten Schweissmuffe, wodurch diese im Mittelteil nicht frei Schrumpfen kann. Dadurch entstehen relativ hohe unterschiedliche innere Spannungen in diesen Bereichen, welche sich auf das Langzeitverhalten der Verbindung negativ auswirken.

Aufgabe der vorliegenden Erfindung ist die Schaffung eines Verfahrens und einer dafür erforderlichen Vorrichtung der eingangs genannten Art, mittels welchen die Vorteile der beiden bekannten Verfahren kombiniert werden, ohne dass deren Nachteile auftreten. Mit diesem Verfahren sollen dünnwandige Rohre bzw. Leitungselemente aus einem thermoplastischen Material auch mit hohem Meltindex einwandfrei und mit geringen Restspannungen verschweisst werden können. Die dafür erforderliche Vorrichtung soll einfach im Aufbau und eine betriebssichere Arbeitsweise gewährleisten.

Erfindungsgemäss wird dies durch die im Anspruch 1 angeführten Verfahrensmerkmale und die im Anspruch 5 angeführten Vorrichtungsmerkmale gelöst.

Besonders vorteilhafte Ausgestaltungen sind in den übrigen, abhängigen Ansprüchen gekennzeichnet.

Durch das erfindungsgemässe Verfahren verläuft die Wärmeerzeugung zumindest in einem Teilbereich des Heizleiters automatisch in zwei Phasen, wobei die Auslösung der zweiten Phase automatisch durch den auf die bei der Erwärmung entstehenden Schmelze ausgeübten Druck erfolgt. Dabei wird im Bereich der beiden Rohrenden in der zweiten Phase durch automatische Ueberbrückung mehrerer Windungen des Heizleiters die Wärmezufuhr gedrosselt, wodurch das Einfallen bzw. Deformieren der Rohrenden vermieden wird.

Der Ablauf der Erwärmung in zwei Phasen wird durch die Anordnung eines Ueberbrückungsleiters gemäss dem Vorrichtungsanspruch 5 ermöglicht. Durch dieses einfache Mittel kann ohne eine zusätzliche elektrische Steuerung der Stromzufuhr eine einwandfreie, spannungsarme Schweissverbindung ohne deformierte Rohrenden erreicht werden.

Die Erfindung ist in den beiliegenden Zeichnungen in Ausführungsbeispielen dargestellt und nachfolgend beschrieben.

Es zeigen :

Figur 1 einen Längsschnitt durch eine als Schweissmuffe ausgebildete Vorrichtung zum Verschweissen vor dem Schweissvorgang,

Figur 2 ein Teillängsschnitt von Fig. 1 während dem Schweissvorgang, und

Figur 3 ein Strom/Zeit-Diagramm des Schweissvorganges.

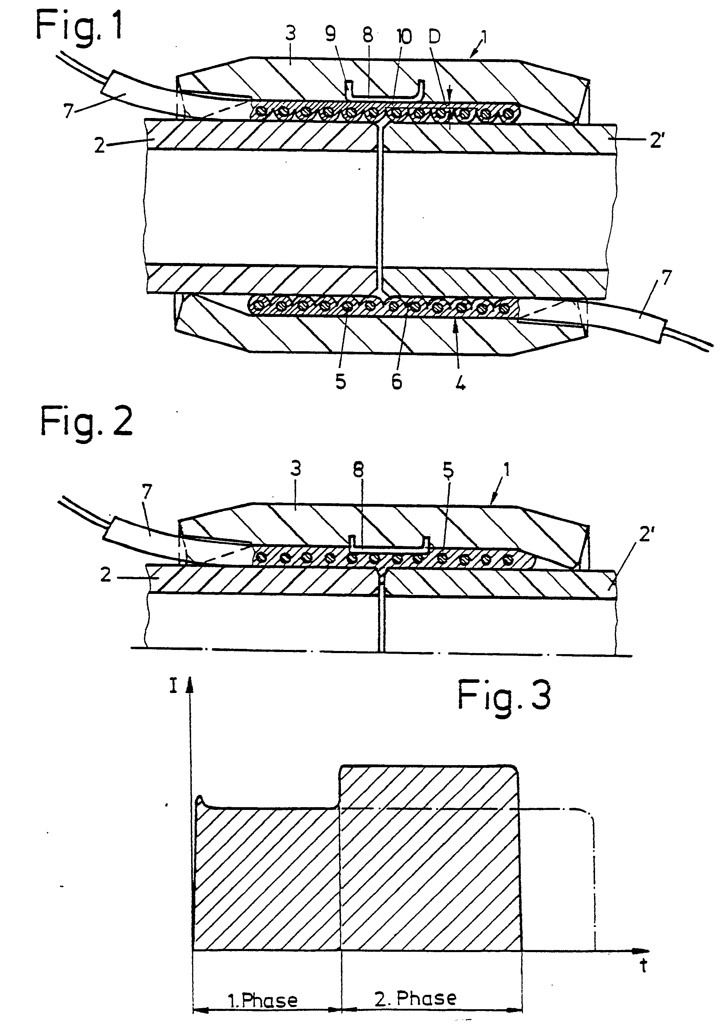

Die in Fig. 1 gezeigte Schweissmuffe 1 zum Verbinden von Leitungselementen wie z. B. Rohren 2 und 2' aus thermoplastischem Material besteht aus einem Ringkörper 3 und einer Wicklung 4. Die Wicklung 4 besteht aus einem spiralförmig gewundenen Heizleiter 5, bzw. Widerstandsdraht, welcher mit einer Ummantelung 6 aus thermoplastischem Material versehen ist. Durch Verschweissung der einzelnen Windungen miteinander, vorzugsweise am äusseren Umfang, entsteht eine kompakte Wicklung.

Der Heizleiter ist vorzugsweise monofil gewickelt, wobei je ein Drahtende 7 zum Anschluss an eine Stromquelle an den Enden des Ringkörpers herausgeführt ist.

Die Wicklung wird in den aufgeweiteten erwärmten Ringkörper eingeschoben, wobei durch das Aufweiten die im Ringkörper bereits vorhandenen eingefrorenen Schrumpfspannungen noch vergrössert werden.

Vor dem Einbringen der Wicklung 4 wird im Ringkörper 3 ein als Drahtbügel ausgebildeter Ueberbrückungsleiter 8 an einer Stelle des Innenumfanges des Ringkörpers 3 mittig im Bereich der zusammenstossenden Rohrenden 2 und 2' angebracht.

Der Ueberbrückungsleiter 8 überdeckt in Längsrichtung der Schweissmuffe einen Bereich von mehreren Windungen und weist zwei radial nach auswärts gerichtete Schenkel 9 auf, mittels welchen er im Ringkörper 3 verankert ist. Vor dem Verschweissen ist zwischen dem z. B. aus einem Kupferdraht bestehenden Ueberbrückungsleiter 8 und dem Heizleiter 5 eine Isolierschicht 10 aus thermoplastischem Material mit der Dicke D angeordnet, welche in dem gezeigten Ausführungsbeispiel der Dicke der Ummantelung 6 entspricht.

Besteht die Wicklung aus einem blanken, in den Ringkörper in Nuten eingelegten oder beim Spritzvorgang zur Herstellung des Ringkörpers umspritzten Heizleiter 5, muss ebenfalls eine Isolierschicht D zwischen dem Heizleiter und dem Ueberbrückungsleiter vorhanden sein.

Neben der dargestellten Ausbildung und Anordnung des Ueberbrückungsleiters kann dieser umfangsmässig an mehreren Stellen z. B. auch als Blechstreifen bzw. Bügel oder als den ganzen Umfang umfassender Blechstreifen ausgebildet sein, wobei immer zwischen diesem und dem Heizleiter eine Isolierschicht mit einer festgelegten Dicke angeordnet ist.

Das Verfahren zum Verschweissen zweier Rohrleitungen mit der beschriebenen Schweissmuffe läuft wie folgt ab.

Nach dem Einstecken der Rohrenden 2, 2' in die Schweissmuffe 1 und Anschliessen der Wicklung 4 mit ihren Drahtenden 7 an eine Stromquelle z. B. eines Schweissgerätes wird der Schweissvorgang durch Einschalten der Stromzufuhr eingeleitet. In einer erten Phase wird auf die gesamte Wicklungslänge die Schweissmuffe und die Rohrenden so weit erwärmt, dass das an die Wicklung anliegende thermoplastische Material dieser Teile plastisch verformbar wird, wobei gleichzeitig im Ringkörper 3 der Schweissmuffe 1 die eingefrorenen Schrumpfspannungen ausgelöst werden. Hierdurch entsteht ein nach innen gerichteter radialer Druck auf das plastische Material, welcher zu einem festen Kontakt des thermoplastischen Materials des Innenbereichs des Ringkörpers 3, der Ummantelung 6 der Wicklung 4 und des Aussenbereichs der Rohrenden 2, 2' führt.

Gleichzeitig wird hierbei, wie aus Fig. 2 ersichtlich der Ueberbrückungsleiter 8 durch Verdrängen der Isolierschicht 10 in metallischen Kontakt mit mehreren Windungen des Heizleiters 5 gebracht. In diesem Moment wird automatisch die zweite Phase des Schweissvorganges ausgelöst, in welcher durch Kurzschliessen dieser Windungen im Mittelbereich der Wicklung keine bzw. nur noch eine sehr geringe Wärme erzeugt wird. Dadurch wird verhindert, dass in dem Bereich der Fuge zwischen den beiden Rohrenden die Schmelze zu flüssig wird und in das Rohrinnere gelangt und dass sich die Endpartien der Rohre verformen.

In den übrigen nicht kurzgeschlossenen Windungen der Wicklung wird weiterhin Wärme erzeugt welche, das thermoplastische Material weiter aufschmilzt, so dass es sich gegenseitig verbindet und eine einwandfreie Schweissverbindung gewährleistet wird.

Wie aus Fig. 3 ersichtlich, steigt in der zweiten Phase durch den niedrigeren Gesamtwiderstand die Stromstärke, so dass die dabei entstehende stärkere Erwärmung eine Verkürzung der Schweisszeit ermöglicht. In Fig. 3 ist die Stromstärke J in Abhängigkeit von der Schweisszeit t aufgetragen, wobei die schraffierte Fläche der erzeugten Wärmemenge in den beiden Phasen entspricht.

Die strichpunktierte Linie zeigt die erforderliche Schweisszeit bei gleicher erforderlicher Wärmemenge, wenn der Schweissvorgang nicht wie in den beschriebenen zwei Phasen abläuft.

Das hier beschriebene Schweissverfahren ist nicht nur bei Verwendung von Schweissmuffen mit geschlossenen Wicklungen anwendbar, sondern es kann auch bei der Verschweissung von Leitungsteilen mittels um die zu verschweissenden Teile legbarer Heizmatten und darüber spannbarer Schellen oder Sattelstücken angewendet werden. Derartige Schweisseinrichtungen sind z. B. in der DE-PS-2 242 369 oder in der EP-A2-0 035 750 beschrieben.

Hierbei ist lediglich erforderlich, dass in der Schelle bzw. einem Sattelstück ebenfalls ein Ueberbrückungsleiter mit einer Isolierschicht zum Heizleiter der Heizmatte angeordnet ist. Der Schmelzedruck wird hierbei durch eine äussere Krafteinwirkung beim Zusammenspannen der Schelle bzw. der Sattelstücke erzeugt. Im übrigen läuft das Verfahren wie bereits beschrieben ab.

Wird der Ueberbrückungsleiter als ein zusätzlich Wärme erzeugender Heizleiter bzw. Widerstand ausgebildet, kann auch mit diesem Verfahren in zwei oder mehreren verschiedenen Phasen — je nach unterschiedlicher Dicke der Isolierschicht — partiell und zeitlich unterschiedlich zusätzlich Wärme erzeugt werden. Damit kann der zeitliche und örtliche Verlauf der Wärmeerzeugung optimal an die jeweils erforderlichen Verhältnisse ohne zusätzliche Spulenanschlüsse und aufwendige Schaltungen im Schweissgerät angepasst werden.

Der zeitliche Verlauf der einzelnen Phasen kann mit der Dicke D der Isolierschicht 10 zwischen Heizleiter 5 und Ueberbrückungsleiter 8 festgelegt werden.

**Patentansprüche**

1. Verfahren zum Verschweissen von Leitungselementen aus thermoplastischem Material, wobei durch Zufuhr elektrischer Energie in einen Windungen aufweisenden Heizleiter (5) eines Schweissverbindungselements (1) Wärme in den zu verschweissenden Teilen (2, 2') erzeugt wird, dadurch gekennzeichnet, dass die Wärmeerzeugung mindestens in einem Teilbereich des Heizleiters (5) in mindestens zwei verschiedenen Phasen abläuft, wobei die zweite Phase automatisch durch den auf die in der ersten Phase entstehende Schmelze ausgeübten Druck ausgelöst wird und dass in dieser Phase in dem Teil-Bereich des Heizleiters mehrere Windungen elektrisch überbrückt werden.

2. Verfahren nach Anspruch 1, dadurch gekennzeichnet, dass die Windungen kurzgeschlossen werden und in dem Teil-Bereich in der zweiten Phase gegenüber dem übrigen Bereich in den Heizwindungen eine wesentlich geringere bzw. keine Wärme erzeugt wird.

3. Verfahren nach einem der Ansprüche 1 oder 2, wobei der Heizleiter in Form von geschlossenen Windungen in einer eingefrorene Schrumpfspannungen aufweisenden Schweissmuffe angeordnet ist, dadurch gekennzeichnet, dass der Druck durch die Auslösung der Schrumpfspannungen in der ersten Phase erzeugt wird.

4. Verfahren nach einem der Ansprüche 1 oder 2, dadurch gekennzeichnet, dass der Druck durch eine von aussen auf die Schweissverbindung aufgebrachte Kraft erzeugt wird.

5. Vorrichtung zur Durchführung des Verfahrens nach einem der Ansprüche 1 bis 4 mit mindestens einem in mindestens einem Schweiss-Verbindungselement (1) angeordneten Heiz-Leiter (5) mit Windungen, dadurch gekennzeichnet, dass am Aussenumfang mindestens eines Teilbereiches des Heiz-Leiters (5) mindestens ein zu diesem isolierter Ueberbrückungsleiter (8) angeordnet ist.

6. Vorrichtung nach Anspruch 5, dadurch gekennzeichnet, dass der Ueberbrückungsleiter (8) als ein, einen geringen ohmschen Widerstand aufweisender Kurzschlussleiter ausgebildet ist.

7. Vorrichtung nach Anspruch 6, dadurch gekennzeichnet, dass der Kurzschlussleiter (8) ein Drahtbügel, vorzugsweise aus Kupferdraht ist.

8. Vorrichtung nach einem der Ansprüche 5 bis 7, dadurch gekennzeichnet, dass der Ueberbrückungsleiter (8) im Bereich des Zusammenstosses der zu verbindenden Leitungsteile (2, 2') angeordnet ist.

9. Vorrichtung nach einem der Ansprüche 5 bis 8, gekennzeichnet durch eine bestimmte Dicke (D) der Isolierschicht (10) zwischen dem Heizleiter (5) und dem Ueberbrückungsleiter (8), durch die die zeitliche Dauer der ersten Phase bestimmbar ist.

10. Vorrichtung nach einem der Ansprüche 5, 7, 8 oder 9, dadurch gekennzeichnet, dass der Ueberbrückungsleiter (8) als zusätzlicher Heizleiter ausgebildet ist.

**Claims**

1. Process for welding conduits of thermoplastics material, whereby heat is produced in the parts (2, 2') to be welded by supplying electrical energy into a heating conductor (5) of a welded joint having windings, characterised in that the heat production occurs at least in one partial area of the heating conductor (5) in at least two different phases, wherein the second phase is automatically triggered by the pressure exerted on the melt occurring in the first phase, and in that in this phase in the partial area of the heating conductor several windings are electrically bridged.

2. Process according to claim 1, characterised in that the windings are short circuited and in the partial area in the second phase a substantially smaller amount of heat, or no heat, is produced in the heating windings with respect to the other area.

3. Process according to one of claims 1 or 2, whereby the heating conductor is arranged in the form of closed windings in a welding sleeve having frozen-in shrinkage tensions, characterised in that the pressure is produced by the release of the shrinkage tensions in the first phase.

4. Process according to one of claims 1 or 2, characterised in the pressure is produced by a force applied to the welded joint from the outside.

5. Device for carrying out the process according to one of claims 1 to 4, having at least one heating conductor (5) with windings arranged in at least one welded joint element (1), characterised in that at the outer circumference of at least a partial area of the heating conductor (5) there is arranged at least one bridge conductor (8) insulated from this.

6. Device according to claim 5, characterised in that the bridge conductor (8) is constructed as a short circuit conductor having a small ohmic resistance.

7. Device according to claim 6, characterised in that the short circuit conductor (8) is a wire strap, preferably of copper wire.

8. Device according to one of claims 5 to 7, characterised in that the bridge conductor (8) is arranged in the area of the engagement of the conduit parts (2, 2') to be connected.

9. Device according to one of claims 5 to 8, characterised by a specific thickness (D) of the insulating layer (10) between the heating conductor (5) and the bridge conductor (8), by which the time duration of the first phase can be determined.

10. Device according to one of claims 5, 7, 8 or 9, characterised in that the bridge conductor (8) is constructed as an additional heating conductor.

## Revendications

1. Procédé pour le soudage d'éléments de conduite en matière thermoplastique, avec production de chaleur dans les pièces (2, 2') à souder par apport d'énergie électrique au conducteur de chauffage bobiné d'un élément de soudage (1), ledit procédé étant caractérisé en ce que la production de chaleur s'effectue en deux phases au moins dans une zone partielle au moins du conducteur de chauffage (5), la seconde phase étant déclenchée automatiquement par la pression exercée sur la matière fondue pendant la première phase ; et plusieurs spires sont shuntées électriquement dans la zone partielle du conducteur de chauffage pendant la seconde phase.

2. Procédé selon la revendication 1, caractérisé en ce que les spires sont court-circuitées et que la production de chaleur dans la zone partielle est beaucoup plus faible que dans le reste des spires de chauffage ou nulle pendant la seconde phase.

3. Procédé selon une des revendications 1 ou 2, le conducteur de chauffage étant logé sous forme de spires fermées dans un manchon de soudage présentant des contraintes de retrait figées, ledit procédé étant caractérisé en ce que la pression est produite par la libération des tensions de retrait pendant la première phase.

4. Procédé selon une des revendications 1 ou 2, caractérisé en ce que la pression est produite par une force extérieure exercée sur l'assemblage soudé.

5. Dispositif pour la mise en œuvre du procédé selon une quelconque des revendications 1 à 4, avec au moins un conducteur de chauffage (5) à spires, logé dans au moins un élément de soudage (1), ledit dispositif étant caractérisé par au moins un conducteur de pontage (8) disposé sur la circonférence extérieure d'une zone partielle au moins du conducteur de chauffage (5) et isolé par rapport à ce dernier.

6. Dispositif selon la revendication 5, caractérisé en ce que le conducteur de pontage (8) est réalisé sous forme d'un conducteur de court-circuitage présentant une faible résistance.

7. Dispositif selon la revendication 6, caractérisé en ce que le conducteur de court-circuitage (8) est un étrier en fil, et de préférence en fil de cuivre.

8. Dispositif selon une quelconque des revendications 5 à 7, caractérisé en ce que le conducteur de pontage (8) est disposé dans la zone d'aboutement des tronçons de conduite (2, 2') à assembler.

9. Dispositif selon une quelconque des revendications 5 à 8, caractérisé par une épaisseur (D) déterminée de la couche isolante (10) entre le conducteur de chauffage (5) et le conducteur de pontage (8), ladite épaisseur permettant de fixer la durée de la première phase.

10. Dispositif selon une quelconque des revendications 5, 7, 8 ou 9, caractérisé en ce que le conducteur de pontage (8) est réalisé sous forme d'un conducteur de chauffage supplémentaire.

Fig. 1

7    3    9    8    10   D    1

2                                                   2'

5    6    4

Fig. 2

7    3    8    5    1

2                                              2'

Fig. 3

I

1. Phase    2. Phase

t

1